# EUROPEAN PATENT APPLICATION

(11) **EP 4 797 614 A1**
(43) Date of publication of application: **26.08.2026**
(21) Application number: 25158799.4
(22) Date of filing: 19.02.2025
(51) Int. Cl.: H04L 9/40, H04W 12/041, H04W 12/08

(54) **A DEVICE, A SERVER AND METHODS FOR SHARING A DIGITAL KEY FOR A VEHICLE**

(71) Applicant: Bayerische Motoren Werke Aktiengesellschaft, 80809 München (DE)
(72) Inventor: Fink, Matthias, 81541 München (DE)

(57) **Abstract**

The present document describes a vehicle server (140) configured to manage a digital key (161) for controlling one or more vehicle functions (103) of a vehicle (100). The vehicle server (140) is configured to store target information regarding a target device (180) which is eligible to a shared digital key (181) of the digital key (161) for controlling the one or more vehicle functions (103) of the vehicle (100), and to receive a sharing request from a requesting device for a shared digital key (181) of the digital key (161). Furthermore, the vehicle server (140) is configured to verify, based on the stored target information, whether or not the requesting device is eligible to the shared digital key (181), and to cause a key sharing process for providing the shared digital key (181) on the requesting device to be performed in dependence of the verification on whether or not the requesting device is eligible to the shared digital key (181).

## Description

The present document is directed at enabling a digital key-based service for a vehicle. In particular, the present document relates to sharing a digital key for enabling a digital key-based service.

A vehicle may comprise a communication unit which allows a user to control one or more functions of the vehicle using a portable device, such as a smartphone or a smart watch. Example functions which may be controlled using the portable device are unlocking and/or locking of a door of the vehicle and/or starting the motor of the vehicle. The portable device typically comprises a digital key for authentication of the portal device at the vehicle. Such a portable device may be referred to as a digital key device. The digital key may be a CCC (Car Connectivity Consortium) digital key.

The vehicle may be owned by a service provider such as a car rental company. Hence, the vehicle may be part of a fleet of vehicles. An infleeted vehicle is typically used by a number of different users. The service provider may enable the different users to use the infleeted vehicle by selectively sharing the digital key for the vehicle with the portable devices of the different users. The key sharing may be performed by a so-called server based owner device (SBOD) or by a so-called server based friend device (SBFD).

The present document is directed at enabling a particularly secure key sharing process for sharing a digital key from a server to a digital key entity, such as a smart device or a key card. The technical problem is solved by each one of the independent claims. Preferred examples are specified in the dependent claims.

According to an aspect, a vehicle server configured to manage a digital key for controlling one or more vehicle functions of a vehicle is described. The digital key may be a digital key according to the CCC, Car Connectivity Consortium, Technical Specification CCC-TS-101 (notably release 3 or higher, or release 4 or higher). The key sharing of the digital key may be managed by a service server (notably a SBOD or SBFD), in order to provide a digital key-based service, wherein the service requires one or more devices to hold a shared digital key that enables the respective device to control one or more vehicle functions (such as unlocking a door of the vehicle and/or starting the motor of the vehicle). The service server may handle the key sharing process. The digital key-based service may be managed by a management server, such as a server of a car sharing or car rental provider or a service of a workshop for repairing the vehicle.

The vehicle server is configured to store target information regarding one or more target devices which are eligible to a shared digital key of the digital key for controlling the one or more vehicle functions of the vehicle. The vehicle server may be configured to receive the target information, notably within a preShare request, from
- the service server which is configured to manage the key sharing process;
- the management server which is configured to manage a digital key-based service for the vehicle; and/or
- a device having an account for the digital key-based service for the vehicle at the management server.

The target information may be indicative of and/or dependent on
- an identifier of the vehicle; and/or
- an identifier of a manufacturer of the vehicle; and/or
- an identifier of the target device and/or of a user of the target device.

The user of the target device may have an account with an account identifier at a manufacturer and/or at a management entity (notably at a device OEM) of the target device. The target information may be indicative of and/or dependent on the account identifier of the account of the target device and/or of the user of the target device (at the device OEM). Hence, the target information may be indicative of and/or may be dependent on the device OEM account of the target device. The account identifier may be available at the device which provides the target information.

As indicated above, the key sharing process may be performed in the context of the provision of a digital key-based service. Hence, the sharing request for a shared digital key may be issued by the management server for managing the digital key-based service for the vehicle. The target information may be indicative of an identifier of the account of a user of the digital key-based service that is managed by the management server. The identifier of the account may be available and/or stored on the device of the user. The account may be indicative of one or more target devices which are eligible for the shared digital key (and for the digital key-based service).

The target information may be indicative of one or more of the above-mentioned information in an anonymized manner. In particular, a hash value may be generated across data which comprises one or more of the above-mentioned information (notably one or more of the above-mentioned identifiers). The target information may comprise the hash value.

In a preferred example, the target information comprises, in particular is, the AccountInfoHash data entity according to the CCC, Car Connectivity Consortium, Technical Specification CCC-TS-101 (Release 3 or higher, or Release 4 or higher).

The vehicle server is further configured to receive a sharing request from a requesting device for a shared digital key of the digital key. The sharing request may comprise an identifier of the requesting device and/or of a user of the requesting device.

The sharing request may comprise a request for tracking the shared digital key by a key tracking server (KTS). Hence, the sharing request may be received subject to creating and invoking the sharing URL for the shared digital key (wherein the sharing URL may be created by the service server and wherein the sharing URL may be invoked by the requesting device).

In addition, the vehicle server is configured to verify, based on the stored target information (and possibly based on the identifier of the requesting device and/or of the user of the requesting device), whether or not the requesting device is eligible to the shared digital key.

Furthermore, the vehicle server is configured to cause a key sharing process for providing the shared digital key on the requesting device to be performed in dependence of the verification on whether or not the requesting device is eligible to the shared digital key. In particular, the vehicle server may be configured to interrupt and/or abort the key sharing process for providing the shared digital key on the requesting device, if it is determined that the requesting device is not eligible to the shared digital key. By way of example, the vehicle server may be configured to deny the provision of the shared digital key on the requesting device.

On the other hand, the vehicle server may be configured to continue and/or to allow the key sharing process for providing the shared digital key on the requesting device, if it is determined that the requesting device is eligible to the shared digital key. In particular, the vehicle server may be configured to cause the provision of the shared digital key on the requesting device without the need for a user of the requesting device to enter a PIN code, if it is determined that the requesting device is eligible to the shared digital key.

Within the key sharing process, the shared digital key may be generated directly on the requesting device itself (within a secure storage area, notably within the secure element, of the requesting device). This digital key may then be approved by the sharer (e.g., the service server) and/or by the vehicle server (notably by the key tracking server (KTS)). In particular, a key attestation may be generated for the shared digital key, wherein the key attestation may comprise a digital signature of the sharer (e.g., the service server) and/or a key tracking receipt that has been issued by the vehicle server (notably the KTS). Hence, the vehicle server may be configured to issue the key tracking receipt of the shared digital key in dependence of the verification on whether or not the requesting device is eligible to the shared digital key. The key tracking receipt may be issued, if it is determined that the requesting device is eligible to the shared digital key (thereby continuing and/or allowing the key sharing process for the shared digital key). On the other hand, the key tracking receipt may not be issued, if it is determined that the requesting device is not eligible to the shared digital key (thereby interrupting and/or aborting the key tracking process, and/or thereby denying the provision of the shared digital key on the requesting device).

Hence, the sharing request may comprise, notably may correspond to, a key tracking request for tracking the shared digital key. The vehicle server may be configured to issue or to not issue a key tracking receipt for the shared digital key in dependence of the verification on whether or not the requesting device is eligible to the shared digital key, thereby causing the key sharing process for providing the shared digital key on the requesting device to be performed in dependence of the verification on whether or not the requesting device is eligible to the shared digital key. In particular, the vehicle server may be configured to issue the key tracking receipt, if it is determined that the requesting device is eligible to the shared digital key (thereby causing a valid shared digital key to be provided on the requesting device). On the other hand, the vehicle server may be configured to not issue the key tracking receipt, if it is determined that the requesting device is not eligible to the shared digital key (thereby causing that not valid shared digital key is provided on the requesting device).

By doing this, a particularly secure and comfortable key sharing process is enabled.

As indicated above, the target information may comprise different information which is indicative of the target device. The use of the accountID (i.e., of the identifier of the account of the target device at the device OEM) within the target information is particularly beneficial, as it is typically necessary to provide the accountID (of the requesting device which is requesting the shared digital key) to the vehicle server, when requesting the shared digital key to be tracked. In particular, the accountID may be included within the key tracking request. As a result of this, the vehicle server is enabled to verify the eligibility of the requesting device in a particularly efficient and reliable manner. For this purpose, the vehicle server may verify whether the accountID that is included within the key tracking request is in line with the (possibly anonymized) target information.

According to a further aspect, a device configured to control one or more vehicle functions of a vehicle using a shared digital key derived from a digital key is described. The device is configured to provide target information regarding one or more target devices which are eligible to a shared digital key of the digital key for controlling the one or more vehicle functions of the vehicle. The device may be configured to request the target information to be stored in conjunction with an identifier of the vehicle on the management server which is configured to manage a digital key-based service for the vehicle. As a result of this, the target information may be provided in a particularly efficient and comfortable manner for future key sharing processes.

The device may be configured to request approval by the user of the device for the provision of the target information (via a user interface of the device). The target information may be provided (notably may be sent), possibly only, subject to approval by the user of the device. As a result of this, a particularly secure key sharing process may be enabled.

The device is further configured to request a shared digital key for controlling the one or more vehicle functions of the vehicle. **In** reaction to providing the target information and to requesting the shared digital key, a sharing URL for the shared digital key may be received. The sharing URL may be invoked to cause generation of the shared digital key on the device. Invoking the sharing URL may cause the generation of the shared digital key on the device. Furthermore, invoking the sharing URL may cause a sharing request, notably a key tracking request, for the (already generated) shared digital key to be sent to the vehicle server.

According to an aspect, a method for managing a digital key for controlling one or more vehicle functions of a vehicle is described. The method comprises storing target information regarding a target device which is eligible to a shared digital key of the digital key for controlling the one or more vehicle functions of the vehicle, and receiving a sharing request from a requesting device for a shared digital key of the digital key. Furthermore, the method comprises verifying, based on the stored target information, whether or not the requesting device is eligible to the shared digital key, and causing a key sharing process for providing the shared digital key on the requesting device to be performed in dependence of the verification on whether or not the requesting device is eligible to the shared digital key.

According to a further aspect, a method for enabling a device to control one or more vehicle functions of a vehicle using a shared digital key derived from a digital key is described. The method comprises providing target information regarding one or more target devices which are eligible to a shared digital key of the digital key for controlling the one or more vehicle functions of the vehicle. Furthermore, the method comprises requesting a shared digital key for controlling the one or more vehicle functions of the vehicle, and in reaction to providing the target information and to requesting the shared digital key, receiving a sharing URL for the shared digital key. In addition, the method comprises invoking the sharing URL to cause generation of the shared digital key on the device (and to cause tracking of the shared digital key on the key tracking server).

According to a further aspect, a software program is described. The software program may be adapted for execution on a processor and for performing the method steps of one or more of the methods outlined in the present document when carried out on the processor.

According to another aspect, a storage medium is described. The storage medium may comprise a software program adapted for execution on a processor and for performing the method steps of one or more of the methods outlined in the present document when carried out on the processor.

According to a further aspect, a computer program product is described. The computer program may comprise executable instructions for performing the method steps of one or more of the methods outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Furthermore, it is noted that brackets are used within the present document to indicate optional features.

The invention is explained below in an exemplary manner with reference to the accompanying drawings, wherein
Fig. 1a shows an example system for controlling a vehicle function using a digital key device and/or for sharing a digital key;
Fig. 1b shows an example digital key device;
Fig. 2 illustrates an example scenario for sharing a digital key for a digital key-based service; and
Figs. 3a and 3b flow charts of example methods for sharing a digital key for a digital key-based service.

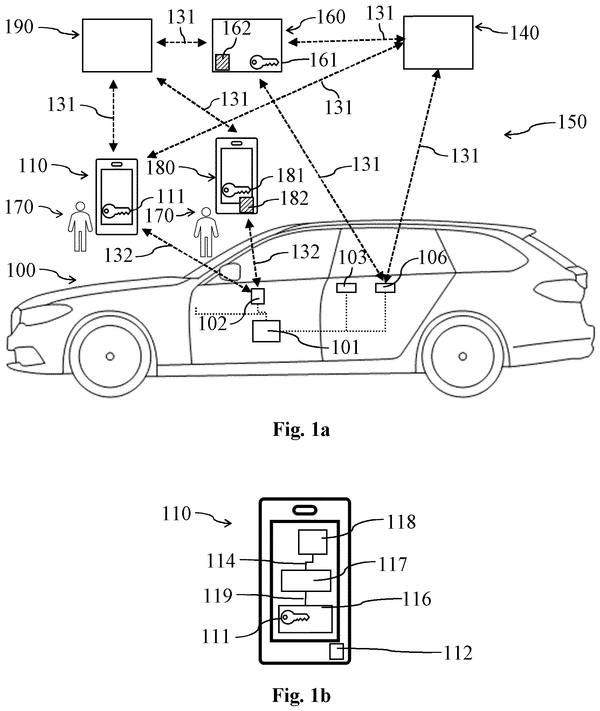

As outlined above, the present document is directed at the technical problem of generating and/or sharing a digital key for a digital key-based service for a vehicle (such as a car) in a reliable and secure manner. In this context, Fig. 1a shows an example system 150 which comprises a vehicle 100 and at least one digital key device 110. The digital key device 110 may be a portable electronic device, such as a smartphone, a tablet PC, a wearable smart device (such as a smart watch), etc., wherein a digital key 111 is stored on the portable electronic device, notably on a protected memory section (e.g., a secure element) of the portable electronic device. The device 110 typically comprises an integrated power supply, such as a battery, in order to allow the device 110 to be operated in an autonomous manner.

The digital key device 110 may communicate with a communication unit 102 of the vehicle 100 via one or more different wireless communication links 132. Different communication links 132 may be used for different purposes. In particular, a Bluetooth Low Energy (BLE) communication link may be used to
- determine the distance and/or the relative position between the digital key device 110 and the vehicle 100 (notably based on the signal strength, in particular the RSSI (Received Signal Strength Indicator), of the radio signals which are exchanged between the vehicle 100 and the device 110, and/or based on a channel sounding technique); and/or
- exchange data between the digital key device 110 (e.g., a control command for controlling a vehicle function, such as unlocking a door and/or opening or closing a window and/or activating or deactivating a heating function).

Alternatively, or in addition, a Ultrawideband (UWB) communication link may be used to determine the location of the device 110 relative to the vehicle 100 in a relatively precise manner. The determination of the location of the device 110 using the UWB communication link may be referred to as UWB ranging.

Alternatively, or in addition, a Near Field Communication (NFC) communication link may be used to provide a short-range communication between the device 110 and the vehicle 100. For establishing the NFC communication link, the device 110 may be held in close proximity (e.g., in a distance of less than 10cm) from the communication unit 102 of the vehicle 100.

A control unit 101 of the vehicle 100 may be configured to control at least one vehicle function 103 of the vehicle 100 in dependence of the communication between the device 110 and the vehicle 100. In this context, the digital key 111 of the device 110 may be verified, in particular authenticated. Furthermore, subjected to authentication, one or more vehicle functions 103 may be controlled, notably in dependence of
- the distance between the device 110 and the vehicle 100;
- the location of the device 110 relative to the vehicle 100; and/or
- a control command sent by the device 110 to the vehicle 100 via a communication link 112.

In an example system 150, a BLE communication link 112 may be established between the device 110 and the vehicle 100, once the distance between the device 110 and the vehicle 100 is equal to or less than a certain distance threshold. Once the BLE communication link 112 has been established, the device 110 may be authenticated with the vehicle 100 using the digital key 111 of the device 110. Subject to authentication of the device 110, the device 110 may be enabled to send one or more control commands via the communication link 112 for controlling one or more vehicle functions 103.

The system 150 may comprise a vehicle-server 140 which may e.g., be managed by a manufacturer of the vehicle 100. The device 110 and/or a communication unit 106 of the vehicle 100 may be configured to communicate with the vehicle-server 140 via a (wireless) communication link 131 (e.g., a 3G, 4G, 5G or higher communication link).

Fig. 1b shows details of an electronic device 110 (i.e., the digital key device). Fig. 1b shows the secure storage area 116, in particular the so-called "secure element", in which the digital key 111 is stored. The secure storage area 116 typically comprises a digital key (DK) applet that is configured to provide one or more functions (e.g., generating a digital signature) with respect to the digital key 111.

The device 110 may comprise an operating system 117 which is configured to interact with the storage area 116, notably with the DK applet of the storage area 116, via a (secure) data interface 119. The operating system 117 may execute a software application 118, e.g., a software application 118 which is configured to interact with the vehicle-server 140. The operating system 117 may be configured to transfer data between the software application 118 and the operating system 117 via a data interface 114. Furthermore, the device 110 may comprise a communication module 112 for establishing a communication link 132 with the vehicle 100 and/or for establishing a communication link 131 with a server 140, 190.

The user 170 of the device 110 with the digital key 111 may enable another user and/or another electronic device to control one or more vehicle functions 103. For this purpose, the digital key device 110 may cause a shared digital key to be provided to and/or generated on another electronic device, wherein the shared digital key typically determines the scope of the one or more vehicle functions 103 that can be controlled by the other electronic device. The shared digital key is derived from the digital key 111. In particular, the shared digital key may be a subordinate key of the digital key 111 (within a given public key infrastructure, PKI).

As an alternative to an owner device 110, a digital key 111 may be owned by a server, e.g., a server for managing a fleet of vehicles, as may be used by a car rental company. A server 160 that owns a digital key 111 to a vehicle 100 may be referred to as a SBOD (Server Based Owner Device). A SBOD is typically the root element of the sharing tree (i.e., of the key hierarchy) of a digital key 161. When a vehicle 100 is infleeted into a fleet of vehicles, a SBOD may be provided that a service provider (e.g., for providing a rental or a fleet service), notably a server 190 of the service provider, can interact with to request one or more shared digital keys 181 (for one or more different electronic devices 180).

Alternatively, or in addition, a sharer device 110 may share a digital key 111 with a service server 160, wherein a service server 160 with a shared digital key 161 may be referred to as an SBFD (Server Based Friend Device). An SBFD may be provided by directly or indirectly sharing a digital key 161 with the owner (a natural person or a server) of the digital key 111. In the context of the sharing process, an attestation 162 of the digital key 161 may be generated (and stored on the service server 160 acting as a SBFD). The SBFD may be linked with a service provider, wherein the service provider may interact with the SBFD to trigger a key sharing process (based on the digital key 161), e.g., in order to provide a shared digital key 181 to an electronic device 180 of a customer of the service provider (e.g., in case of a car sharing service) or to an electronic device 180 of an employee of the service provider (e.g., in case of a maintenance service). Within the key sharing process a key attestation 182 of the shared digital key 181 may be generated.

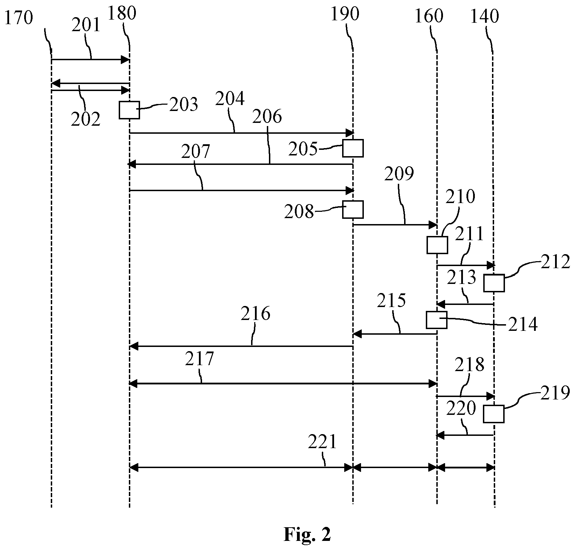

Fig. 2 illustrates an example process for sharing the digital key 161 with a (portable) device 180. The process may be performed subsequent to a successful infleeting of the vehicle 100 (i.e., subject to providing a digital key 161 on the service server 160). A user 170 of the device 180 may interact with a software application 118 of the device 180 (step 201) to start the process for obtaining a shared digital key 181 (e.g., in order to enable the device 180 for a digital key-based service). The subsequent key sharing process may involve generating a shared digital key 181 on the device 180, notably on the secure element of the device 180.

**In** the context of the key sharing process, the device 180 may be required to provide target information to the vehicle server 140, wherein the target information is indicative of the target device to which the shared digital key 181 is to be provided. The target information may e.g., be indicative of
- an identifier of the target device; and/or
- an identifier of a user account of the user 170 of the device 180 for the digital key-based service; and/or
- an identifier of a user account of the user 170 of the device 180 at a manufacturer and/or at a managing entity (notably at the device OEM) of the device 180.

The user 170 may be requested to approve that the target information is provided to the vehicle server 140 (step 202). Subject to approval of the user 170, the target information may be generated (step 203), e.g., based on data that is available on the device 180. **In** a preferred example, the target information comprises or corresponds to the variable "AccountInfoHash" as specified in the CCC (Car Connectivity Consortium) Technical Specification CCC-TS-101 which is incorporated herein by reference. Hence, the target information may comprise and/or may be determined based on and/or may be indicative of
- the accountID of the account of the user 170 at the device OEM, notably at a server of the device OEM;
- the vehicle identifier of the vehicle 100 that the shared digital key 181 relates to; and/or
- random data (notably a salt), associated with the vehicle OEM of the vehicle 100 and/or of the vehicle server 140.

The target information may correspond to a hash value that is determined based on the above-mentioned data. Alternatively, or in addition, the target information may be indicative of one or more of the above-mentioned identifiers (notably the accountID) in an anonymized manner. In particular, the target information may be such that the one or more identifiers (notably the accountID) are not exposed to the vehicle server 104, the management server 190 and/or the service server 160.

The device 180 may (optionally) send a binding request (step 204) to the management server 190 (of the service provider for providing the digital key-based service). The binding request may comprise the target information and the identifier of the vehicle 100 (notably the vehicle identification number, VIN) that the target information is to be linked to. The target information may then be stored in conjunction with the identifier of the vehicle 100, in order to enable a subsequent retrieval of the target information from a storage area of the management server 190. The management server 190 may inform the device 180 that the target information has been stored successfully (step 207).

The device 180 may send a key sharing request to the management server 190, wherein the key sharing request indicates the identifier of the vehicle 100 for which a shared digital key 181 is to be provided (step 207). Furthermore, the key sharing request may comprise the target information (which indicates the target device for the shared digital key 181). The target information may be omitted, if the target information has already been stored on the management server 190 previously (as outlined in conjunction with steps 204 to 206).

The management server 190 may determine the target information for the requested key sharing process (step 208). The target information may be extracted from the key sharing request or may be retrieved from the storage area of the management server 190. Furthermore, the management server 190 may cause the target information for the key sharing process to be provided to the vehicle server 140. For this purpose, the target information may be provided to the service server 160 (step 209), and the service server 160 may include the target information into a preShare command (step 210) which is subsequently sent to the vehicle server 140 (step 211). The vehicle server 140 may be configured to store the target information for the key sharing process (step 212), thereby enabling the vehicle server 140 to subsequently verify whether or not the sharing URL for the shared digital key 181 is invoked by the correct target device 180 (that is identified by the target information).

The vehicle server 140 may inform the service server 160 that the target information has been stored successfully (step 213). The service server 160 may then create the mailbox for providing the shared digital key 181 (step 214). The mailbox may be created on a sharing server (not shown in Fig. 2). The sharing URL that points to the mailbox on the sharing server may be provided to the device 180 via the management server 190 (steps 215, 216).

The sharing URL may be used by the device 180 to cause generation of the shared digital key 181 on the device 180. The sharing URL may be passed on to another device, and the other device may invoke the sharing URL, in order to cause generation of the shared digital key 181 on the other device. Hence, the device that invokes the sharing URL may differ from the device 180 (i.e., the target device) that has initially initiated the key sharing process (within step 204). The device that invokes the sharing URL for the shared digital key 181 may be referred to as the requesting device, wherein the requesting device may be the device 180 that is indicated by the target information or another device.

The provision of the shared digital key 181 on the requesting device may be initiated by the requesting device invoking the sharing URL. The step of invoking the sharing URL is part of step 217 of the sharing process. As part of the sharing process, the vehicle server 140 (notably the key tracking server (KTS) of the vehicle server 140) is requested to track the shared digital key 181 (step 218). The trackKey request (of step 218) is indicative of the requesting device (notably of the identifier of the account of the user of the requesting device, i.e., of the account ID). The vehicle server 140 may verify whether or not the requesting device is entitled to receive the shared digital key 181 (step 219). In particular, it may be verified whether or not the information that is provided by the requesting device is in line with the target information that has been stored on the vehicle server 140. By way of example, it may be verified whether the account the key sharing is requested for (by the requesting device which invokes the sharing URL) equals the account for which the key sharing was initially accepted and/or planned (by the service server 160). In particular, it may be verified (at least in an indirect and/or anonymized manner) whether the account ID that has been provided by the requesting device is in line with the account ID that is stored within the target information.

If the verification is successful, the service server 160 may be informed accordingly (step 220), and the sharing process may be continued (step 221), thereby causing the provision of the shared digital key 181 of the requesting device (which corresponds to the device 180 that is indicated within the target information). On the other hand, if the verification is not successful, the sharing process may be discontinued, and the shared digital key 181 may not be provided on the requesting device.

Hence, an API (Application Programming Interface) may be provided on the device side to request the AccountInfoHash (i.e., the target information) which may be indicative of the vehicle OEM identifier and/or the vehicle identifier. The device 180 may prompt the user for consent on whether the target information (notably the AccountInfoHash) may be sent to the service server 160 and/or to the vehicle server 140. The device 180 may then resolve the target information (notably the AccountInfoHash) with the user's account ID and the provided information (notably the vehicle information). This allows the software application 118 on the device 180 (e.g., a vehicle OEM application, a rental application, a service application, etc.) to determine the target information (notably the AccountInfoHash) for a particular key sharing process or for generally binding the target information to the management server 190 (e.g., the fleet management server (FMS) and/or the service provisioning server (SPS)) for future key sharing requests by the device 180 or by a third party (e.g., an administrator).

As the key sharing can only be performed successfully on a device of the user that is indicated by the target information, an activation of the shared digital key 181, e.g., by entering a PIN into the user interface of the vehicle 100 or on the receiver device, may be skipped and/or omitted, which increases the comfort-of-use of the key sharing process.

The key sharing process may be used by
- a person that is participating in a private or corporate car sharing service; and/or
- a mechanic at a workshop who wants to work on the vehicle 100.

In general, the key sharing process may be used in all scenarios where a person using a smart device 180 (smart phone, smart watch, ...) requests a digital key 181 to be shared to the device 180.

As indicated above, binding of the target information (notably of the AccountInfoHash) for a known vehicle 100 may be performed to the backend account on the management server 190 (FMS/SPS) side. The key sharing process may be applied to scenarios where a third party instance triggers a key sharing process to a known person's device which was bound to a known vehicle 100, such as a fleet administrator (e.g., a dispatcher for vehicle management), a service administrator (e.g., a workshop front desk employee), or an automated system (e.g., a person is scheduled to perform a task and will receive an automated key sharing from the system, e.g. shortly before the scheduled time frame).

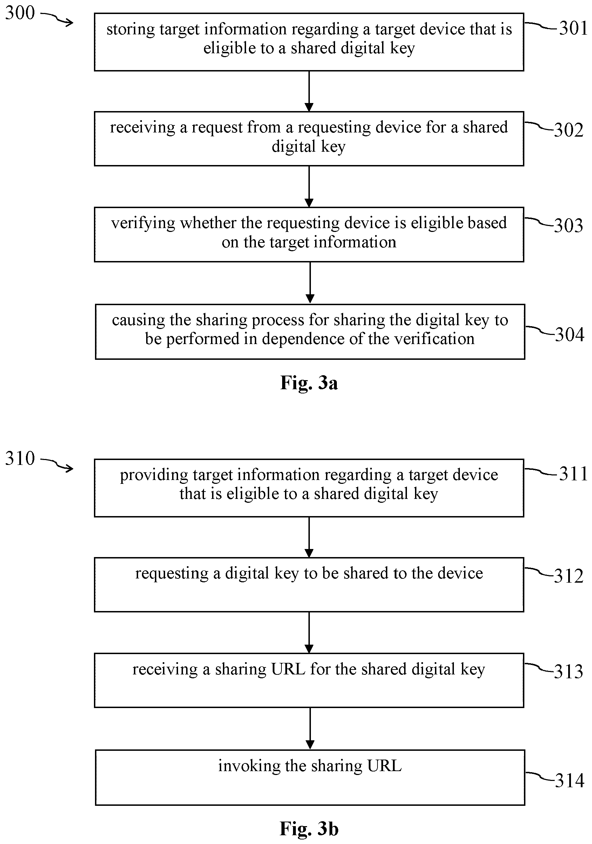

Fig. 3a shows a flow chart of a (possibly computer-implemented) method 300 for managing a digital key 161 for controlling one or more vehicle functions 103 of a vehicle 100. The method 300 may be executed by a vehicle server 140 of a manufacturer of the vehicle 100.

The method 300 comprises storing 301 target information regarding one or more target devices 180 which are eligible to a shared digital key 181 of the digital key 161 for controlling the one or more vehicle functions 103 of the vehicle 100. The target information may have been sent by a service server 160 (notably a SBOD or a SBFD, e.g., within a preShare request (according to the CCC Technical Specification CCC-TS-101).

The method 300 further comprises receiving 302 a sharing request from a requesting device for a shared digital key 181 of the digital key 161. The sharing request may be a request for tracking the shared digital key 181 within a key tracking server (KTS). The sharing request may be issued subject to invoking the sharing URL for the shared digital key 181 by the requesting device.

In addition, the method 300 comprises verifying 303, based on the stored target information, whether or not the requesting device is eligible to the shared digital key 181. In particular, it may be verified whether or not the requesting device is part of the one or more target devices 180 which are indicated to be eligible for the shared digital key 181 within the target information.

Furthermore, the method 300 comprises causing 304 the key sharing process for providing the shared digital key 181 on the requesting device to be performed in dependence of the verification on whether or not the requesting device is eligible to the shared digital key 181. In particular, the key sharing process may be aborted or continued in dependence of the verification on whether or not the requesting device is eligible to the shared digital key 181.

The sharing request may comprise or may be a key tracking request for tracking the shared digital key 181 on the key tracking server (wherein the key tracking server may be part of the vehicle server 140). Causing 304 the key sharing process to be performed in dependence of the verification on whether or not the requesting device is eligible to the shared digital key 181 may comprise or may correspond to issuing or not issuing a key tracking receipt for the shared digital key 181 in dependence of the verification on whether or not the requesting device is eligible to the shared digital key 181. The key tracking receipt may be issued (by the vehicle server 140), if it is determined based on the target information that the requesting device is eligible to the shared digital key 181. The key tracking receipt may then be added to the key attestation 182 for the shared digital key 181. On the other hand, no key tracking receipt may be issued for the shared digital key 181, if it is determined based on the target information that the requesting device is not eligible to the shared digital key 181. As a result of this, no key attestation 182 is issued for the shared digital key 181, thereby aborting the key sharing process and/or thereby making the shared digital key 181 non usable for controlling the one or more vehicle functions 103.

Fig. 3b shows a flow chart of a (possibly computer-implemented) method 310 for enabling a device 180 to control one or more vehicle functions 103 of a vehicle 100 using a shared digital key 181 derived from a digital key 161. The method 310 may be executed by a device 180.

The method 310 comprises providing 311 target information regarding one or more target devices 180 which are eligible to a shared digital key 181 of the digital key 161 for controlling the one or more vehicle functions 103 of the vehicle 100. The target information may be sent to a management server 190 which is configured to manage a digital key-based service using a shared digital key 181, wherein the provision of the digital key-based service requires a device 180 to control one or more vehicle function 103 using the shared digital key 181 (e.g., for enabling access to the vehicle 100 and/or for enabling a motor start of the vehicle 100). The target information may have been provided at an earlier stage (e.g., in the context of a previous key sharing request and/or in the context of a dedicated binding request for depositing the target information at the management server 190).

Furthermore, the method 310 comprises requesting 312 a shared digital key 181 for controlling the one or more vehicle functions 103 of the vehicle 100. The shared digital key 181 may be requested in the context of a service activation request for activating the digital key-based service for the vehicle 100.

The method 310 further comprises, in reaction to providing 311 the target information and to requesting 312 the shared digital key 181, receiving 313 a sharing URL for the shared digital key 181. The sharing URL may indicate a mailbox on a sharing server, which comprises the data that is necessary for generating the shared digital key 181 on the device 180.

In addition, the method 310 comprises invoking 314 the sharing URL. Invoking 314 the sharing URL may cause the shared digital key 181 to be generated on the requesting device 180, notably on the secure storage area of the requesting device 180. This shared digital key 181 is typically only usable to controlling one or more vehicle functions 103 in conjunction with a valid key attestation 182. In this context, invoking 314 the sharing URL may further cause a request to the vehicle server 140 for tracking the shared digital key 181. In particular, the vehicle server 140 may be requested to issue a key tracking receipt (as part of the key attestation 182 for the shared digital key 181). Furthermore, the service server 160 (i.e., the sharing entity of the digital key 161) may be requested to sign the key attestation 182.

In reaction to receiving the key tracking request, the vehicle server 140 may verify (based on the stored target information) whether or not the device 180 is eligible to the shared digital key 181. The key tracking receipt for the shared digital key 181 may be issued, if it is determined that the device 180 is eligible. On the other hand, the key tracking receipt may be denied, thereby aborting the key sharing process, if it is determined that the device 180 is not eligible.

Hence, a particularly secure and reliable key sharing for a digital key-based service may be achieved using a service based (owner or friend) device (i.e., by a service server 160).

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A vehicle server (140) configured to manage a digital key (161) for controlling one or more vehicle functions (103) of a vehicle (100); wherein the vehicle server (140) is configured to
- store target information regarding a target device (180) which is eligible to a shared digital key (181) of the digital key (161) for controlling the one or more vehicle functions (103) of the vehicle (100);
- receive a sharing request from a requesting device for a shared digital key (181) of the digital key (161);
- verify, based on the stored target information, whether or not the requesting device is eligible to the shared digital key (181); and
- cause a key sharing process for providing the shared digital key (181) on the requesting device to be performed in dependence of the verification on whether or not the requesting device is eligible to the shared digital key (181).

2. The vehicle server (140) of claim 1, wherein the target information is indicative of
- an identifier of the vehicle (100); and/or
- an identifier of the target device (180) and/or of a user of the target device (180).

3. The vehicle server (140) of claim 3, wherein
- the target information is indicative of the one or more identifiers in an anonymized manner; and/or
- the target information comprises a hash value that has been generated using the one or more identifiers.

4. The vehicle server (140) of any previous claim, wherein the target information comprises, in particular is, the AccountInfoHash data entity according to the CCC, Car Connectivity Consortium, Technical Specification CCC-TS-101.

5. The vehicle server (140) of any previous claim, wherein
- the sharing request comprises an identifier of the requesting device and/or of a user of the requesting device; and
- the vehicle server (140) is configured to verify, based on the identifier of the requesting device and/or of the user of the requesting device and based on the stored target information, whether or not the requesting device is eligible to the shared digital key (181).

6. The vehicle server (140) of any previous claim, wherein the sharing request comprises a request for tracking the shared digital key (181) by a key tracking server.

7. The vehicle server (140) of any previous claim, wherein the vehicle server (140) is configured to
- interrupt and/or abort the key sharing process for providing the shared digital key (181) on the requesting device, if it is determined that the requesting device is not eligible to the shared digital key (181); and/or
- cause the key sharing process for providing the shared digital key (181) on the requesting device to be continued, if it is determined that the requesting device is eligible to the shared digital key (181).

8. The vehicle server (140) of claim 7, wherein the vehicle server (140) is configured to cause the provision of the shared digital key (181) on the requesting device without the need for a user of the requesting device to enter a PIN code, if it is determined that the requesting device is eligible to the shared digital key (181).

9. The vehicle server (140) of any previous claim, wherein
- the sharing request comprises, notably corresponds to, a key tracking request for tracking the shared digital key (181); and
- the vehicle server (140) is configured to issue a key tracking receipt for the shared digital key (181) in dependence of the verification on whether or not the requesting device is eligible to the shared digital key (181), thereby causing the key sharing process for providing the shared digital key (181) on the requesting device to be performed in dependence of the verification on whether or not the requesting device is eligible to the shared digital key (181).

10. The vehicle server (140) of any previous claim, wherein the vehicle server (140) is configured to receive the target information, notably within a preShare request, from
- a service server (160) which is configured to manage the key sharing process;
- a management server (190) which is configured to manage a digital key-based service for the vehicle (100); and/or
- a device (180) having an account for the digital key-based service for the vehicle (100) at the management server (190).

11. A device (180) configured to control one or more vehicle functions (103) of a vehicle (100) using a shared digital key (181) derived from a digital key (161); wherein the device (180) is configured to
- provide target information regarding one or more target devices (180) which are eligible to a shared digital key (181) of the digital key (161) for controlling the one or more vehicle functions (103) of the vehicle (100);
- request a shared digital key (181) for controlling the one or more vehicle functions (103) of the vehicle (100);
- in reaction to providing the target information and to requesting the shared digital key (181), receive a sharing URL for the shared digital key (181); and
- invoke the sharing URL to cause generation of the shared digital key (181) on the device (180).

12. The device (180) of claim 11, wherein the device (180) is configured to request the target information to be stored in conjunction with an identifier of the vehicle (100) on a management server (190) which is configured to manage a digital key-based service for the vehicle (100).

13. The device (180) of any of claims 11 to 12, wherein the device (180) is configured to
- request approval by a user of the device (180) for the provision of the target information; and
- provide the target information subject to approval by the user of the device (180).

14. A method (300) for managing a digital key (161) for controlling one or more vehicle functions (103) of a vehicle (100); wherein the method (300) comprises,
- storing (301) target information regarding a target device (180) which is eligible to a shared digital key (181) of the digital key (161) for controlling the one or more vehicle functions (103) of the vehicle (100);
- receiving (302) a sharing request from a requesting device for a shared digital key (181) of the digital key (161);
- verifying (303), based on the stored target information, whether or not the requesting device is eligible to the shared digital key (181); and
- cause (304) a key sharing process for providing the shared digital key (181) on the requesting device to be performed in dependence of the verification on whether or not the requesting device is eligible to the shared digital key (181).

15. A method (310) for enabling a device (180) to control one or more vehicle functions (103) of a vehicle (100) using a shared digital key (181) derived from a digital key (161); wherein the method (310) comprises,
- providing (311) target information regarding one or more target devices (180) which are eligible to a shared digital key (181) of the digital key (161) for controlling the one or more vehicle functions (103) of the vehicle (100);
- requesting (312) a shared digital key (181) for controlling the one or more vehicle functions (103) of the vehicle (100);
- in reaction to providing (311) the target information and to requesting (312) the shared digital key (181), receiving (313) a sharing URL for the shared digital key (181); and
- invoking (314) the sharing URL to cause generation of the shared digital key (181) on the device (180).
